# EUROPÄISCHE PATENTANMELDUNG

(11) **EP 2 273 249 A1**
(43) Veröffentlichungstag der Anmeldung: **12.01.2011**
(21) Anmeldenummer: 09164675.2
(22) Anmeldetag: 06.07.2009
(51) Int. Cl.: G01M 13/04, G05B 17/02, H02P 21/00

(54) **Verfahren und Vorrichtung zur sensorlosen Erkennung von Lagerschäden an und zur Systemidentifikation von einem elektrischen Antriebssystem**

(71) Anmelder: Baumüller Nürnberg GmbH, 90482 Nürnberg (DE)
(72) Erfinder: Villwock, Sebastian, D-90574 Roßtal (DE); Pacas, José Mario, D-57258 Freudenberg (DE)
(74) Vertreter: Götz, Georg Alois

(57) **Zusammenfassung**

Verfahren zur Identifikation eines als Mehrmassenschwinger zu modellierenden elektrischen Antriebssystems und/oder zur Detektion von Schäden in Lagern und/oder an verschleißbehafteten Elementen in einem elektrischen Antriebssystem, wobei im Rahmen des Verfahrens eine mechanische Winkelgeschwindigkeit des elektrischen Antriebssystems geberlos bestimmt und mittels der geberlos bestimmten mechanischen Winkelgeschwindigkeit eine Signalverarbeitung auf Basis von Korrelogrammen und/oder eines Welchverfahrens durchgeführt wird, wobei im Rahmen der Signalverarbeitung der Frequenzgang der Mechanik des elektrischen Antriebssystems bestimmt wird, dessen Daten zur Bestimmung wenigstens eines Parameters des elektrischen Antriebssystems verwendet werden.

## Beschreibung

Die Erfindung betrifft ein Verfahren zur Identifikation eines als Mehrmassenschwinger zu modellierenden elektrischen Antriebssystems und/oder zur Detektion von Schäden in Lagern und/oder an verschleißbehafteten Elementen in einem elektrischen Antriebssystem sowie eine zugehörige Vorrichtung und ein entsprechendes elektrisches Antriebssystem.

Der mechanische Verband eines elektrischen Antriebs lässt sich in der Praxis häufig als Mehrmassenschwinger modellieren. Das Antriebssystem wird im Sinne einer Modellbildung identifiziert, um dann auf Grundlage des identifizierten Modells eine Parametrierung der Regler bzw. weiterer Bestandteile des Antriebssystems vorzunehmen. Die Modellbildung ist für den Vorgang der Inbetriebnahme des Antriebssystems entscheidend. Daneben wird bei elektrischen Antriebssystemen zweckmäßigerweise eine Zustandsüberwachung vorgenommen. Im Rahmen einer solchen Zustandsüberwachung sollte insbesondere eine Detektion von Lagerschäden bzw. von Schäden an verschleißanfälligen Elementen des Antriebssystems durchgeführt werden.

Bei bisherigen Verfahren, die sich mit der Modellbildung beio bzw. mit der Detektion von Schäden in elektrischen Antriebssystemen beschäftigen, werden mechanische Sensoren eingesetzt, mit denen die mechanische Winkelgeschwindigkeit oder der mechanische Rotorpositionswinkel des Antriebssystems bestimmt werden, um anhand dieser sensorisch bestimmten Größen die erforderlichen Berechnungen durchführen zu können.

Grundsätzlich ist es bereits bekannt, die Winkelgeschwindigkeit elektrischer Maschinen alleine basierend auf der Messung der Klemmengrößen der Maschine zu bestimmen. Die bisher bekannten Identifikationsmethoden für elektrische Antriebssysteme, die entsprechend ebenso Einsatz bei der Diagnose von Schäden in Antriebssystemen finden, sind jedoch allesamt geberbehaftete Methoden. Das bedeutet, dass zur Durchführung dieser Verfahren mit dem Drehgeber ein separates Bauteil erforderlich wird, wodurch sich einerseits die Kosten erhöhen, andererseits der Aufwand bei der Montage und Auswertung steigt und wodurch zudem zusätzliche Fehlerquellen entstehen können.

Der vorliegenden Erfindung liegt somit die Aufgabe zugrunde, ein Verfahren zur Identifikation eines als Mehrmassenschwinger zu modellierenden elektrischen Antriebssystems und/oder zur Detektion von Schäden in Lagern und/oder an verschleißbehafteten Elementen in einem elektrischen Antriebssystem anzugeben, das diesbezüglich verbessert ist.

Zur Lösung dieser Aufgabe ist erfindungsgemäß ein Verfahren dieser Art vorgesehen, das sich dadurch auszeichnet, dass im Rahmen des Verfahrens eine mechanische Winkelgeschwindigkeit des elektrischen Antriebssystems geberlos bestimmt und mittels der geberlos bestimmten mechanischen Winkelgeschwindigkeit eine Signalverarbeitung auf Basis von Korrelogrammen und/oder eines Welchverfahrens durchgeführt wird, wobei im Rahmen der Signalverarbeitung der Frequenzgang der Mechanik des elektrischen Antriebssystems bestimmt wird, dessen Daten zur Bestimmung wenigstens eines Parameters des elektrischen Antriebssystems verwendet werden.

Das erfindungsgemäße Verfahren kombiniert somit spezifische Identifikationsverfahren für Mehrmassenschwinger bzw. zur Detektion von Lagerschäden und sonstigen Schäden in elektrischen Antriebssystemen, die bisher nur auf der Basis der Verwendung spezieller Geber bzw. Sensoren bekannt sind, mit einer geberlosen Bestimmung der mechanischen Winkelgeschwindigkeit. So wird erfindungsgemäß mittels einer speziellen Signalverarbeitung auf der Basis von Korrelogrammverfahren bzw. eines Welchverfahrens eine geberlose Identifikation eines Mehrmassenschwingers bzw. eine geberlose Diagnose von Lagerschäden und/oder Schäden an verschleißbehafteten Elementen des Antriebssystems ermöglicht. Dadurch können zuverlässige Verfahren zur Systemidentifikation, die bisher nur geberbehaftet bekannt waren, nun auch geberlos realisiert werden. Somit leistet die Erfindung einen wertvollen Beitrag für die automatisierte Inbetriebnahme elektrischer Antriebssysteme und auch für die Diagnose und Wartung solcher elektrischer Antriebe. Das Welchverfahren wird verwendet, um unter Rauschminderung die Signalstärke gegenüber der Frequenz abzuschätzen. Das Welchverfahren basiert auf dem Konzept der Verwendung von Periodogrammen, um ein Signal aus dem Zeitraum in den Frequenzraum zu übertragen.

Geberlose Verfahren zur Bestimmung der mechanischen Winkelgeschwindigkeit, die ohne einen mechanischen Sensor für die Messung der Winkelgeschwindigkeit bzw. des Rotorpositionswinkels auskommen, liefern ab einer minimalen Statorfrequenz sichere und zuverlässige Ergebnisse. Das Vorliegen einer derartigen minimalen Statorfrequenz als Bedingung ist beim erfindungsgemäßen Verfahren auf Basis der erwähnten Auswertung mittels Korrelogrammen bzw. eines Welchverfahrens unter Bestimmung des Frequenzgangs der Mechanik des elektrischen Antriebssystems stets gegeben. Dies ermöglicht die erfindungsgemäße Kombination der geberlosen Bestimmung der Winkelgeschwindigkeit mit diser spezifischen Signalverarbeitung in jedem denkbaren Anwendungsfall.

Der Identifikationsvorgang selbst gliedert sich in zwei Schritte, wobei zunächst mit Hilfe der Welch- oder Korrelogrammmethode anhand gemessener Zeitsignale der Frequenzgang der Mechanik berechnet wird, während nach der digitalen Signalverarbeitung die Bestimmung der Anlagenparameter erfolgt. In der Regel wird die Bestimmung der Parameter des elektrischen Antriebssystems so durchgeführt, dass im Ergebnis ein vollständiges Modell des Systems erhalten wird. Daneben ist es aber im Rahmen der Erfindung ebenso denkbar, dass nur spezifische Systemparameter bzw. eine eingeschränkte Zahl von Parametern der Antriebsanlage bestimmt werden.

Details zur Signalverarbeitung sowie zur Möglichkeit der Bestimmung der Anlagenparameter unter Verwendung von Frequenzgangsdaten lassen sich beispielsweise der Dissertation von S. Villwock, "Identifikationsmethoden für die automatisierte Inbetriebnahme und Zustandsüberwachung elektrischer Antriebe", Universität Siegen, 2007, entnehmen.

Die mechanische Winkelgeschwindigkeit kann erfindungsgemäß geberlos anhand gemessener oder zu messender elektrischer Klemmengrößen, insbesondere des elektrischen Stroms und/oder der Spannung, des Antriebssystems bestimmt werden. Die alleinige Verwendung von Klemmengrößen wie Strom und gegebenenfalls Spannung bietet den Vorteil, dass derart auf Größen zurückgegriffen wird, die in aller Regel ohnehin gemessen werden bzw. einfach messbar sind oder bereits vorliegen. Aufwendige bzw. separate zusätzliche Sensoren sind nicht erforderlich.

Das elektrische Antriebssystem kann im Rahmen der Bestimmung des Frequenzgangs mit pseudo-stochastischen Binärsignalen als Testsignalen angeregt werden. Würde der Antrieb nicht wie vorgeschlagen mit pseudo-stochastischen Binärsignalen angeregt, sondern beispielsweise mit seiner Resonanzfrequenz, könnten Beschädigungen bis hin zur Zerstörung der Anlage auftreten. Dementsprechend ist es vorteilhaft, die Systemanregung nicht mit harmonischen Funktionen, sondern mit pseudo-stachastischen Binärsignalen durchzuführen, die beispielsweise mittels eines Testsignalgenerators erzeugt werden können.

Im Rahmen der Bestimmung des Frequenzgangs können mittels eines Testsignalgenerators Testsignale zur Anregung des elektrischen Antriebssystems bestimmt werden und/oder es können Testsignale zur Anregung des elektrischen Antriebssystems mittels eines, insbesondere zur Optimierung des Identifikationsergebnisses, parametrierbaren Testsignalgenerators bestimmt werden.

Es können also einerseits gezielt Signale durch einen Testsignalgenerator erzeugt und zur Anregung des elektrischen Antriebssystems verwendet werden, wobei es andererseits von Vorteil ist, den Testsignalgenerator so auszubilden, dass hinreichend Möglichkeiten zur Parametrierung des Testsignals bzw. des Generators bestehen. Durch die geeignete Einstellung des Testsignals kann das Identifikationsergebnis verbessert bzw. optimiert werden, da Veränderungen des Testsignals einen großen Einfluss auf die Ergebnisse der Identifikationsprozedur haben.

Im Rahmen der Bestimmung des Frequenzgangs können als Signale die drehmomentbildende Komponente des Statorstroms und/oder die Motordrehzahl verarbeitet werden. Für die digitale Signalverarbeitung, die beim erfindungsgemäßen Verfahren durchgeführt wird, sind zweckmäßigerweise geeignete Rechnereinrichtungen vorgesehen, die Teil des elektrischen Antriebssystems sind und gegebenenfalls im Antriebssystem noch weitere Aufgaben erfüllen bzw. die als separate Rechnereinrichtungen über eine Datenverbindung mit dem Antriebssystem verbunden sind. Mittels dieser einen bzw. mittels der mehreren Rechnereinrichtungen kann gegebenenfalls auch die Signalerzeugung erfolgen. Grundsätzlich ist es aber auch denkbar, dass die Signalerzeugung bzw. Systemanregung und die digitale Signalverarbeitung seitens unterschiedlicher Einrichtungen und insbesondere auch getrennt von der übrigen Systemsteuerung erfolgt. Die Verarbeitung der drehmomentbildenden Komponente des Statorstroms und der Motordrehzahl als Signale bietet sich schon deswegen an, weil es sich hierbei um Größen handelt, die entweder bereits standardmäßig in einem Antriebsregelgerät aufgenommen werden bzw. die sich ohne größeren Aufwand ermitteln lassen.

Erfindungsgemäß kann der wenigstens eine Parameter des elektrischen Antriebssystems, und insbesondere können alle Parameter des elektrischen Antriebssystems, mittels eines Levenberg-Marquardt-Verfahrens bestimmt werden. Das numerische Verfahren von Levenberg und Marquardt beruht darauf, dass ein Gauß-Newton-Verfahren mit einer Regularisierungstechnik kombiniert wird, welche absteigende Funktionswerte erzwingt. Auf diese Art und Weise wird ein Optimierungsalgorithmus zur Lösung nichtlinearer Ausgleichungsprobleme geschaffen wird.

Weitere Details zur Verwendung dieses Verfahrens insbesondere im Rahmen einer Fehlerdiagnose und Zustandsüberwachung von verschleißbehafteten Maschinenelementen wie schadhaften Wälzlagern sind der bereits genannten Dissertation von Herrn Dr.-Ing. Villwock zu entnehmen.

Das elektrische Antriebssystem kann als Zweimassenschwinger oder Dreimassenschwinger oder Mehrmassenschwinger modelliert werden. Oft ist bereits eine Modellierung als Zweimassenschwinger ausreichend. Bei komplizierten Systemen kann allerdings auch eine Modellierung als Dreimassenschwinger, Viermassenschwinger usw. zweckmäßig bzw. erforderlich sein.

Das erfindungsgemäße Verfahren kann im Rahmen einer Fehlerdiagnose und/oder einer Zustandsüberwachung von Lagern und/oder verschleißbehafteter Elemente des elektrischen Antriebssystems verwendet bzw. eingesetzt werden. Die Detektion von Lagerschäden bzw. allgemein von Schäden an Verschleiß unterworfenen Anlagenelementen kann also gezielt in ein Fehlerdiagnoseverfahren bzw. eine kontinuierlich bzw. periodisch oder manuell angestoßen stattfindende Zustandsüberwachung integriert werden.

Zur Detektion von Schäden bzw. Lagerfehlern im Rahmen einer Fehlerdiagnose und/oder Zustandsüberwachung von Lagern und/oder verschleißbehafteter Elemente kann eine weitere Frequenzgangsmessung durchgeführt werden, und/oder es kann im Rahmen einer Fehlerdiagnose und/oder einer Zustandsüberwachung von Lagern und/oder verschleißbehafteter Elemente eine Überprüfung auf breitbandige Beschädigungen, insbesondere durch Verschmutzung und/oder mangelhafte Schmierung, und/oder auf singuläre Beschädigungen, insbesondere eines äußeren und/oder inneren Laufrings eines Lagers, durchgeführt werden. Zur Fehlerdiagnose bzw. Zustandsüberwachung von verschleißbehafteten Maschinenelementen wie beispielsweise schadhaften Wälzlagern kann somit die Frequenzgangmessung erneut Verwendung finden. Die Überprüfung der aufgenommenen Signale kann so erfolgen, dass sowohl eine Untersuchung auf breitbandige Beschädigungen, die unter anderem durch eine Verschmutzung oder eine mangelhafte Schmierung von Anlagenelementen entstehen können, als auch auf singuläre Beschädigungen, beispielsweise des äußeren und/oder inneren Laufrings eines Lagers, erfolgt.

Zur Überprüfung auf breitbandige Beschädigungen kann das Spektrum der Messsignale auf nichtvorhersagbare Änderungen über einen weiten Frequenzbereich überprüft werden, und/oder es können zur Überprüfung auf singuläre Defekte charakteristische Fehlerfrequenzen überprüft werden. Es kann also einerseits, um breitbandige Beschädigungen an verschleißbehafteten Elementen aufzuspüren, eine Suche nach Änderungen nichtvorhersagbarer bzw. regelbarer Natur über einen größeren Frequenzbereich im Spektrum durchgeführt werden. Sollen dagegen bzw. ergänzend singuläre Defekte überprüft und aufgefunden werden, so empfiehlt es sich, beispielsweise mittels entsprechender Programme einer Rechnereinrichtung, die die Signalverarbeitung im Rahmen des erfindungsgemäßen Verfahrens durchführt, nach Besonderheiten im Bereich charakteristischer Fehlerfrequenzen zu suchen. Experimentell lässt sich das Verfahren der Frequenzganganalyse zur Erkennung von Lagerschäden bei verschiedenen Lagerfehlern als gut geeignet verifizieren. Die charakteristischen Fehlerfrequenzen lassen sich durch Näherungsformeln ermitteln, in die neben Konstanten lediglich die Anzahl der Wälzkörper des jeweiligen Lagers sowie die mechanische Winkelgeschwindigkeit des Antriebs eingeht.

Die Erfindung ermöglicht somit eine Detektion von Lagerfehlern, sonstigen Anlagenschäden sowie eine Systemidentifikation, wobei auf eine Messung der mechanischen Winkelgeschwindigkeit mit Hilfe eines Drehgebers vollständig verzichtet wird. Stattdessen wird die Winkelgeschwindigkeit beispielsweise anhand der gemessenen Maschinenströme ohne jeglichen mechanischen Sensor bestimmt. Die erfindungsgemäße Kombination der spezifischen Signalverarbeitung auf Basis des Welchverfahrens sowie von Korrelogrammen zur Bestimmung des Frequenzgangs der Mechanik und anschließend unter Verwendung des numerischen Verfahrens von Levenberg und Marquardt zur Bestimmung der Anlagenparameter mit der geberlosen Bestimmung der mechanischen Winkelgeschwindigkeit ermöglicht eine zuverlässige und sehr sichere Identifikation des Mehrmassensystems und außerdem eine Detektion von Lagerschäden, bei der keinerlei aufwendige Sensorik erforderlich ist.

Darüber hinaus betrifft die Erfindung eine Vorrichtung, die zur Identifikation eines als Mehrmassenschwinger zu modellierenden elektrischen Antriebssystems und/oder zur Detektion von Schäden in Lagern und/oder an verschleißbehafteten Elementen in einem elektrischen Antriebssystem, insbesondere wie vorstehend geschildert, ausgebildet ist und die sich dadurch auszeichnet, dass sie Mittel zur geberlosen Bestimmung einer mechanischen Winkelgeschwindigkeit des elektrischen Antriebssystems aufweist und mittels der geberlos bestimmten mechanischen Winkelgeschwindigkeit zur Signalverarbeitung auf Basis von Korrelogrammen und/oder eines Welchverfahrens ausgebildet ist, wobei die Vorrichtung im Rahmen der Signalverarbeitung zur Bestimmung des Frequenzgangs der Mechanik des elektrischen Antriebssystems und zur Verwendung der Daten des Frequenzgangs zur Bestimmung wenigstens eines Parameters des elektrischen Antriebssystems ausgebildet ist.

Dazu umfasst die Vorrichtung zweckmäßigerweise geeignete Einrichtungen zur Signalerzeugung wie einen Testsignalgenerator, um das elektrische Antriebssystem anzuregen und aus den gemessenen Zeitsignalen den Frequenzgang zu berechnen. Die Berechnung und Signalverarbeitung erfolgt mittels wenigstens einer Rechnereinrichtung der Vorrichtung, auf der hierfür entsprechende Programmmittel vorgesehen sind, die insbesondere eine automatische, gegebenenfalls aber auch eine manuell angestoßene, Datenermittlung bzw. -auswertung mit Hilfe der genannten Numerik ermöglichen. Hierzu werden der Rechnereinrichtung als zu verarbeitende Signale vorzugsweise die drehmomentbildende Komponente des Statorstroms und die Motordrehzahl zugeleitet. Gegebenenfalls ist es auch denkbar, dass die Rechnereinrichtung diese Werte zur Signalverarbeitung aktiv anfordert und diese dann über entsprechende Datenleitungen beispielsweise vom Steuerungssystem des elektrischen Antriebssystems erhält. Die Rechnereinrichtung für die digitale Signalauswertung der erfindungsgemäßen Vorrichtung kann aber selbstverständlich auch ein Teil einer ohnehin vorhandenen Anlagensteuerung bzw. eines anlagenseitigen Rechnersystems sein und entsprechend auf die dort vorliegenden Daten zugreifen können.

Des Weiteren betrifft die Erfindung ein elektrisches Antriebssystem, das mit einer Vorrichtung wie vorstehend geschildert ausgebildet ist und/oder das mit Mitteln zur Durchführung eines Verfahrens, wie es eingangs beschrieben wurde, ausgebildet ist.

Weitere Vorteile, Merkmale und Einzelheiten der Erfindung ergeben sich anhand des folgenden Ausführungsbeispiels sowie aus der Zeichnung. Dabei zeigt:

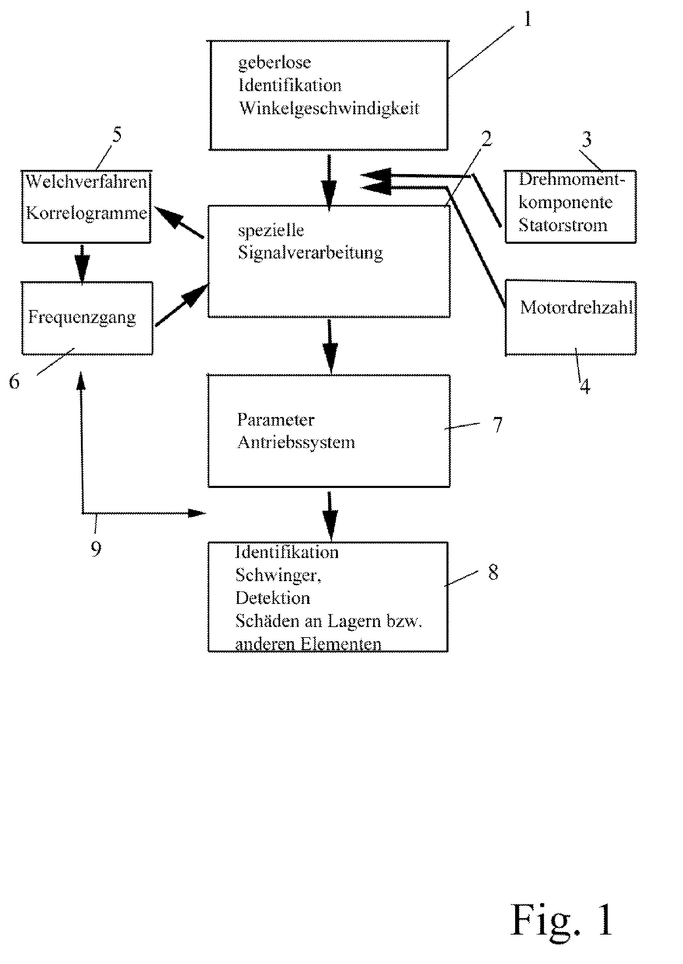

- Figur 1: eine Prinzipskizze des Ablaufs eines erfindungsgemäßen Verfahrens zur Identifikation eines als Mehrmassenschwinger zu modellierenden elektrischen Antriebssystems bzw. zur Detektion von Schäden in Lagern bzw. an verschleißbehafteten Elementen in einem elektrischen Antriebssystem.

Die Erfindung zeichnet sich dadurch aus, dass, gemäß dem Kästchen 1 der Figur 1, die Identifikation der mechanischen Winkelgeschwindigkeit geberlos erfolgt, das heißt ohne Verwendung eines separaten Sensors. Stattdessen werden alleine Klemmengrößen der Maschine verwendet. Beispielsweise werden wie hier die drehmomentbildende Komponente des Statorstroms gemäß Kästchen 3 und die geschätzte Motordrehzahl gemäß Kästchen 4 verwendet, die als zu verarbeitende Signale der speziellen Signalverarbeitung gemäß Kästchen 2 zufließen. Die spezifische Signalverarbeitung der Erfindung beruht auf der Verwendung der Welchmethode bzw. der Korrelogrammmethode gemäß Kästchen 5, anhand derer aus den gemessenen Zeitsignalen der Frequenzgang der Mechanik (vgl. Kästchen 6) berechnet wird.

An die digitale Signalverarbeitung schließt sich dann die Bestimmung der Parameter des Antriebssystems gemäß Kästchen 7 an. Hierbei werden zweckmäßigerweise alle relevanten Systemparameter bzw. alle Modellparameter bestimmt. Die Bestimmung der Anlagenparameter erfolgt im bevorzugten Ausführungsbeispiel unter Verwendung der Frequenzgangsdaten mit Hilfe des numerischen Verfahrens von Levenberg und Marquardt erfolgen. Auf dieser Basis ist neben einer Identifikation des Mehrmassensystems gemäß Kästchen 8 des Weiteren eine Detektion von Lagerschäden und anderer Anlagenschäden möglich. Allgemein kann eine Fehlerdiagnose bzw. Zustandsüberwachung für verschleißbehaftete Maschinenelemente durchgeführt werden. Wie durch den Doppelpfeil 9 angedeutet, wird zur Diagnose von Lagerfehlern und dergleichen Schäden erfindungsgemäß erneut eine Frequenzgangsmessung durchgeführt.

Die Messung der mechanischen Winkelgeschwindigkeit mit Hilfe separater Sensoren ist im Rahmen der Erfindung nicht mehr erforderlich. Die Winkelgeschwindigkeit wird allein anhand der gemessenen Maschinenströme bzw. Spannungen ohne jeglichen mechanischen Sensor bestimmt, um so zu einer geberlosen Identifikation des Mehrmassenschwingers bzw. zu einer geberlosen Diagnose von Lagerschäden zu gelangen.

### Bezugszeichenliste

- 1: Kästchen
- 2: Kästchen
- 3: Kästchen
- 4: Kästchen
- 5: Kästchen
- 6: Kästchen
- 7: Kästchen
- 8: Kästchen
- 9: Doppelpfeil

## Patentansprüche

1. Verfahren zur Identifikation eines als Mehrmassenschwinger zu modellierenden elektrischen Antriebssystems und/oder zur Detektion von Schäden in Lagern und/oder an verschleißbehafteten Elementen in einem elektrischen Antriebssystem, **dadurch gekennzeichnet, dass** im Rahmen des Verfahrens eine mechanische Winkelgeschwindigkeit des elektrischen Antriebssystems geberlos bestimmt und mittels der geberlos bestimmten mechanischen Winkelgeschwindigkeit eine Signalverarbeitung auf Basis von Korrelogrammen und/oder eines Welchverfahrens durchgeführt wird, wobei im Rahmen der Signalverarbeitung der Frequenzgang der Mechanik des elektrischen Antriebssystems bestimmt wird, dessen Daten zur Bestimmung wenigstens eines Parameters des elektrischen Antriebssystems verwendet werden.

2. Verfahren nach Anspruch 1, **dadurch gekennzeichnet, dass** die mechanische Winkelgeschwindigkeit geberlos anhand gemessener oder zu messender elektrischer Klemmengrößen, insbesondere des elektrischen Stroms und/oder der Spannung, des Antriebssystems bestimmt wird.

3. Verfahren nach einem der vorangehenden Ansprüche, **dadurch gekennzeichnet, dass** das elektrische Antriebssystem im Rahmen der Bestimmung des Frequenzgangs mit pseudo-stochastischen Binärsignalen als Testsignalen angeregt wird.

4. Verfahren nach einem der vorangehenden Ansprüche, **dadurch gekennzeichnet, dass** im Rahmen der Bestimmung des Frequenzgangs mittels eines Testsignalgenerators Testsignale zur Anregung des elektrischen Antriebssystems bestimmt werden und/oder dass Testsignale zur Anregung des elektrischen Antriebssystems mittels eines, insbesondere zur Optimierung des Identifikationsergebnisses, parametrierbaren Testsignalgenerators bestimmt werden.

5. Verfahren nach einem der vorangehenden Ansprüche, **dadurch gekennzeichnet, dass** im Rahmen der Bestimmung des Frequenzgangs als Signale die drehmomentbildende Komponente des Statorstroms und/oder die vorzugsweise geschätzte Motordrehzahl verarbeitet werden.

6. Verfahren nach einem der vorangehenden Ansprüche, **dadurch gekennzeichnet, dass** der wenigstens eine Parameter des elektrischen Antriebssystems, insbesondere alle Parameter des Antriebssystems, mittels eines Levenberg-Marquardt-Verfahrens bestimmt werden.

7. Verfahren nach einem der vorangehenden Ansprüche, **dadurch gekennzeichnet, dass** das elektrische Antriebssystem als Zweimassenschwinger oder Dreimassenschwinger oder Mehrmassenschwinger modelliert wird.

8. Verfahren nach einem der vorangehenden Ansprüche, **dadurch gekennzeichnet, dass** das Verfahren im Rahmen einer Fehlerdiagnose und/oder einer Zustandsüberwachung von Lagern und/oder verschleißbehafteter Elemente des elektrischen Antriebssystems verwendet wird.

9. Verfahren nach Anspruch 8, **dadurch gekennzeichnet, dass** zur Detektion von Schäden im Rahmen einer Fehlerdiagnose und/oder einer Zustandsüberwachung von Lagern und/oder verschleißbehafteter Elemente eine weitere Frequenzgangsmessung durchgeführt wird und/oder dass im Rahmen einer Fehlerdiagnose und/oder Zustandsüberwachung von Lagern und/oder verschleißbehafteter Elemente eine Überprüfung auf breitbandige Beschädigungen, insbesondere durch Verschmutzung und/oder mangelhafte Schmierung, und/oder auf singuläre Beschädigungen, insbesondere eines äußeren und/oder inneren Laufrings eines Lagers, durchgeführt wird.

10. Verfahren nach Anspruch 9, **dadurch gekennzeichnet, dass** zur Überprüfung auf breitbandige Beschädigungen das Spektrum der Messsignale auf nicht vorhersagbare Änderungen über einen weiten Frequenzbereich überprüft wird und/oder dass zur Überprüfung auf singuläre Defekte charakteristische Fehlerfrequenzen überprüft werden.

11. Vorrichtung, ausgebildet zur Identifikation eines als Mehrmassenschwinger zu modellierenden elektrischen Antriebssystems und/oder zur Detektion von Schäden in Lagern und/oder an verschleißbehafteten Elementen in einem elektrischen Antriebssystem, insbesondere gemäß einem Verfahren nach einem der vorangehenden Ansprüche **dadurch gekennzeichnet, dass** die Vorrichtung Mittel zur geberlosen Bestimmung einer mechanischen Winkelgeschwindigkeit des elektrischen Antriebssystems aufweist und mittels der geberlos bestimmten mechanischen Winkelgeschwindigkeit zur Signalverarbeitung auf Basis von Korrelogrammen und/oder eines Welchverfahrens ausgebildet ist, wobei die Vorrichtung im Rahmen der Signalverarbeitung zur Bestimmung des Frequenzgangs der Mechanik des elektrischen Antriebssystems und zur Verwendung der Daten des Frequenzgangs zur Bestimmung wenigstens eines Parameters des elektrischen Antriebssystems ausgebildet ist.

12. Elektrisches Antriebssystem, ausgebildet mit einer Vorrichtung nach Anspruch 11 und/oder mit Mitteln zur Durchführung eines Verfahrens nach einem der Patentansprüche 1 bis 10.
